# FASCICULE DE BREVET EUROPEEN

(11) **EP 3 319 780 B1**
(45) Date de publication et mention de la délivrance du brevet: **28.08.2019**
(21) Numéro de dépôt: 16733499.4
(22) Date de dépôt: 29.06.2016
(51) Int. Cl.: B29C 49/48, B29C 49/36, B29C 49/06, B29L 31/00

(54) **DISPOSITIF DE MOULAGE POUR UNE MACHINE DE FABRICATION DE RECIPIENTS EN MATIERE THERMOPLASTIQUE**
FORMVORRICHTUNG FÜR EINE MASCHINE ZUR HERSTELLUNG VON BEHÄLTERN AUS THERMOPLASTISCHEM MATERIAL
MOULDING DEVICE FOR A MACHINE FOR PRODUCING CONTAINERS FROM THERMOPLASTIC MATERIAL

(30) Priorité: 08.07.2015 FR 1556466
(43) Date de publication de la demande: 16.05.2018
(73) Titulaire: Sidel Participations, 76930 Octeville-sur-Mer (FR)
(72) Inventeur: LAMBERT, Thierry, 76930 Octeville-sur-Mer (FR)
(74) Mandataire: Grassin d'Alphonse, Emmanuel Jean Marie
(86) Numéro de dépôt international: PCT/EP2016/065078
(87) Numéro de publication internationale: WO 2017/005561

(56) Documents cités:
- DE-A1-102013 218 282
- US-A1- 2009 155 400
- US-A1- 2012 161 349

## Description

La présente invention concerne un dispositif de moulage pour une machine de fabrication de récipients en matière thermoplastique.

La présente invention concerne plus particulièrement un dispositif de moulage pour une machine de fabrication de récipients en matière thermoplastique à partir d'une préforme, ledit dispositif de moulage comportant au moins :
- deux porte-moules montés mobiles l'un par rapport à l'autre autour d'un axe de rotation entre une position ouverte et une position fermée,
- un moule comportant au moins deux demi-moules qui comportent chacun au moins deux parties respectivement un porte-coquille monté dans l'un des porte-moules et une coquille comportant une empreinte pour le moulage du récipient, et
- des moyens de fixation pour fixer de manière démontable chaque coquille au porte-coquille associé, lesdits moyens de fixation étant montés mobiles entre au moins une position de fixation et une position de libération et commandés sélectivement par l'intermédiaire de moyens d'actionnement embarqués.

Un tel dispositif de moulage est destiné à équiper une machine de fabrication de récipients, notamment mais non exclusivement, des machines dites "rotatives" comportant un carrousel circonférentiellement pourvu d'un nombre déterminé de dispositifs de moulage formant autant de postes de fabrication.

La fabrication de récipients en matière thermoplastique, tels que des bouteilles, flacons, pots, etc. y est effectuée à partir de préformes chaudes, généralement préalablement chauffées dans un four de conditionnement thermique.

En phase de fabrication, selon le nombre d'empreinte(s) des moules, une ou plusieurs préformes sont ainsi amenée(s) à un poste de la machine pour être introduite(s) dans un dispositif de moulage auquel sont associés des moyens de formage par application d'au moins un fluide sous pression, gazeux et/ou liquide, avec ou sans étirage.

Le formage (ou mise en forme) de la préforme est par exemple obtenu par soufflage ou par étirage-soufflage au moyen d'un gaz sous pression, tel que de l'air, voir au moins en partie au moyen d'un liquide sous pression.

Dans une machine de fabrication rotative, chaque dispositif de moulage, dit en "portefeuille", comporte au moins un moule constitué d'au moins deux demi-moules supportés respectivement par deux porte-moules qui sont montés mobiles l'un par rapport à l'autre autour d'un axe de rotation, généralement d'orientation verticale.

L'invention concerne tout particulièrement un dispositif de moulage est dans lequel chaque demi-moule dudit moule est réalisé en deux parties distinctes, respectivement une coquille munie d'une empreinte pour le moulage du récipient à fabriquer et un porte-coquille qui, destiné à supporter ladite coquille, est monté solidairement à l'un des porte-moules.

Une telle conception en deux parties de chaque demi-moule présente des avantages qui, notamment décrits dans le document EP-0.821.641, résultent de la dissociation des fonctions entre, d'une part, la coquille et, d'autre part, le porte-coquille.

Le porte-coquille et la coquille sont par exemple susceptibles d'être réalisés dans des matériaux différents, choisis de manière optimale par rapport à leurs fonctions respectives.

Les moyens nécessaires aux différentes fonctions telles que le refroidissement du moule et/ou la compensation de pression sont avantageusement intégrées au porte-coquille qui est destiné à rester fixé au porte-moule, et la coquille munie de l'empreinte de moulage devient alors la seule partie à démonter pour procéder à un changement de moule.

Un changement de moule est en particulier effectué pour procéder à des fabrications de récipients de formes et/ou de dimensions différentes ou encore pour remplacer un moule (les coquilles) en cas d'endommagement et/ou d'usure.

Pour améliorer encore la conception précitée et dans le but de réduire le temps nécessaire pour réaliser un changement de moule, des perfectionnements ont été apportés aux moyens de fixation intervenant pour fixer de manière démontable chaque coquille au porte-coquille qui lui est associé.

Si le document EP-0.821.641 précité décrit des moyens de fixation permettant déjà un gain de temps, ils nécessitent toutefois une intervention humaine et l'utilisation d'outils pour réaliser, sur un dispositif de moulage en position ouverte, le démontage de l'une puis de l'autre coquille, suivi de leur remplacement par une autre paire de coquilles.

C'est la raison pour laquelle des perfectionnements ont encore été apportés aux moyens de fixation et à titre d'exemples les documents FR-2.949.706, FR-2.949.707 et FR-2.949.708 décrivent des moyens de fixation perfectionnés, dits « rapides », permettant de réduire encore le temps nécessaire pour procéder à un changement de moule, notamment mais non exclusivement en automatisant tout ou partie des opérations requises pour effectuer un tel changement de moule.

Le document WO-2001/026980 décrit des tels moyens de fixation rapides permettant tout particulièrement, alors que le dispositif de moulage est en position fermée, la commande depuis l'extérieur desdits moyens de fixation en vue de la libération ou la fixation d'une coquille (ou demi-moule) au porte-coquille (ou porte-moule) associé.

Selon les différents modes de réalisation décrits et représentés dans ce document, le dispositif de commande associé aux moyens de fixation comporte des moyens d'actionnement pour en commander sélectivement le déplacement entre les positions de fixation et de libération.

Le dispositif de commande peut notamment être de type « mécanique », actionné manuellement (voir par exemple les figures 10 à 14) ou automatiquement par exemple au moyen d'un actionneur, tel qu'un vérin pneumatique (voir figure 21).

Quels qu'en soient les moyens d'actionnement, le dispositif de commande peut être soit monté temporairement sur un dispositif de moulage afin de procéder à un changement de moule (coquilles), soit embarqué c'est-à-dire monté en permanence sur le dispositif de moulage.

Dans le cas d'un dispositif de commande comportant des moyens d'actionnement embarqués, les moyens d'actionnement équipent alors chacun des dispositifs de moulage de la machine de fabrication de récipients.

Tel qu'illustré par la figure 21, les moyens d'actionnement, tels que des vérins pneumatiques, sont commandés sélectivement pour agir, depuis l'extérieur du dispositif de moulage en position fermée, sur une partie de commande formant l'extrémité libre d'un organe d'actionnement des moyens de fixation afin d'en provoquer, à l'encontre de moyens de rappel élastique, le déplacement des moyens de fixation de la position de fixation vers la position de libération.

Un dispositif de moulage comportant des moyens de fixation et un dispositif de commande associé avec des moyens d'actionnement embarqués selon le document WO-2001/026980 donne d'une manière générale satisfaction pour les fabrications de récipients conventionnels pour lesquelles un tel dispositif a jusqu'alors été utilisé. Les documents US2012/161349A1, DE102013-218283A1 et US2009/155400A1 décrivent d'autres dispositifs apparentés de l'art antérieur.

Toutefois, il existe des récipients dont la fabrication est réalisée dans d'autres conditions très particulières et cela en raison des applications auxquelles les récipients obtenus sont destinés.

Selon une caractéristique importante, la présente invention concerne ainsi un dispositif de moulage pour la fabrication de récipients en matière plastique d'un genre bien particulier et qui sont caractérisés par le fait de présenter des propriétés de résistance à la chaleur permettant leur remplissage à chaud.

Les dispositifs de moulage (moules) servant à la fabrication de tels récipients, comme les récipients eux-mêmes, sont généralement désignés par les lettres « HR » correspondant à l'acronyme des termes anglais « *Heat Resistant* ».

En effet, pour accroître la résistance de la matière thermoplastique aux déformations induites par l'élévation de température lors d'un remplissage à chaud, une solution consiste à accroître de manière thermique la cristallinité de la matière.

Pour ce faire, le dispositif de moulage comporte des moyens de chauffage associés au moule, tels qu'un fluide caloporteur ou des éléments résistifs, pour en chauffer l'empreinte formée dans la face interne, par exemple à une température relativement élevée qui, supérieure à 100°C, est généralement de l'ordre de 130°C à 160°C.

En fin de soufflage, la paroi du corps du récipient est maintenue en contact avec la paroi chaude du moule afin d'accroître la cristallinité de la matière, grâce au transfert de chaleur survenant entre la paroi chaude du moule et celle du récipient. Cette technique est encore appelée thermo-fixation (« *heat set* » en anglais).

Les documents WO-2005/025835 ou WO-2013/093335 décrivent, à titre non limitatif, des exemples de moule chauffé pour le formage de tels récipients de type « HR ».

Le moule comporte par exemple des moyens de chauffage électrique formés par des éléments résistifs, lesquels moyens de chauffage sont interposés entre chaque demi-moule et le porte-moule ou logés à l'intérieur du moule.

On se reportera avantageusement aux documents précités pour de plus amples détails sur les moules de type « HR » en général et les moyens de chauffage en particulier.

L'utilisation dans un dispositif de moulage de moyens de fixation associés à des moyens d'actionnement embarqués, tels que ceux décrits dans le document WO-2011/026980 par exemple, pose cependant des problèmes particuliers dans le cas de la fabrication de récipients de type HR.

En effet et tel que rappelé, les températures atteintes dans le cas d'un moule chauffé d'un dispositif de moulage de type HR sont généralement de l'ordre de 130°C à 160°C.

La conception d'un dispositif de moulage de type HR comportant un moule chauffé et dont les demi-moules sont chacun réalisés en deux parties, respectivement un porte-coquille et une coquille fixée de manière démontable grâce à des moyens de fixation rapides, doit cependant résoudre des problèmes de contraintes thermiques propres à ces applications.

Dans un tel dispositif de moulage de type HR, des moyens de fixation intervenant entre la coquille et le porte-coquille ainsi que des moyens d'actionnement embarqués destinés à les commander sélectivement sont ainsi soumis à des températures très élevées, températures de nature à en compromettre notamment la fiabilité de fonctionnement.

En effet, des moyens d'actionnement (tels que des vérins pneumatiques) ne sont généralement pas conçus pour fonctionner dans un environnement avec de telles contraintes thermiques.

Le but de la présente invention est notamment de résoudre au moins en partie les problèmes précités et de proposer un dispositif de moulage apte à fabriquer des récipients de type HR et dans lequel les coquilles chauffées puissent être démontées aussi facilement que rapidement grâce à des moyens de fixation commandés par des moyens d'actionnement embarqués qui soient fiables et peu coûteux.

Dans ce but, l'invention propose un dispositif de moulage du type décrit précédemment, caractérisé en ce que le dispositif de moulage de type « HR » comporte des moyens de chauffage associés au moule pour chauffer au moins lesdites coquilles et en ce que ledit dispositif comporte des moyens de protection thermique pour protéger thermiquement au moins lesdits moyens d'actionnement embarqués.

Avantageusement, les moyens de protection thermique selon l'invention permettent de protéger les moyens d'actionnement embarqués des températures élevées atteintes lors de la fabrication en raison des moyens de chauffage du moule, plus précisément des coquilles.

Grâce aux moyens de protection thermique, un dispositif de moulage de type HR est susceptible d'être équipé de moyens d'actionnement embarqués associés à des moyens de fixation perfectionnés.

De préférence, les moyens d'actionnement embarqués sont constitués par des actionneurs tels que des vérins pneumatiques aptes à commander sélectivement en déplacement des moyens de fixation de chaque coquille chauffée.

Selon d'autres caractéristiques de l'invention :
- lesdits moyens de protection thermique des moyens d'actionnement comportent au moins une plaque de protection thermique ;
- lesdits moyens de protection thermique des moyens d'actionnement comportent au moins une lame d'air formée par un jeu présent entre les moyens de fixation et les moyens d'actionnement lorsque lesdits moyens de fixation occupent la position de fixation ;
- les moyens de fixation de chaque coquille au porte-coquille associé comportent au moins un organe d'actionnement qui est monté mobile, lesdits moyens d'actionnement agissant sélectivement sur ledit au moins un organe d'actionnement pour provoquer à l'encontre de moyens de rappel un changement de position desdits moyens de fixation, de la position de fixation vers la position de libération ;

- les moyens de fixation intervenant entre chaque coquille et son porte-coquille associé sont aptes à être commandés par les moyens d'actionnement lorsque les porte-moules sont en position fermée ;
- le dispositif de moulage comporte des moyens de compensation de pression pour maintenir la fermeture étanche du moule lors de la fabrication de récipients ;
- lesdits moyens d'actionnement embarqués sont liés en déplacement au porte-moule (ou à une pièce intermédiaire);
- le dispositif de moulage comporte des moyens d'isolation thermique agencés entre le porte-coquille et le porte-moule (ou une pièce intermédiaire) ;
- lesdits moyens d'isolation thermique comportent au moins un espace rempli d'air qui est formé par un interstice s'étendant entre le porte-moule (ou une pièce intermédiaire) et le porte-coquille ;
- lesdits moyens d'isolation thermique comportent au moins une plaquette d'isolation thermique interposée entre le porte-moule (ou une pièce intermédiaire) et le porte-coquille.

D'autres caractéristiques et avantages de la présente invention apparaîtront à la lecture de la description détaillée qui va suivre pour la compréhension de laquelle on se reportera aux dessins dans lesquels :

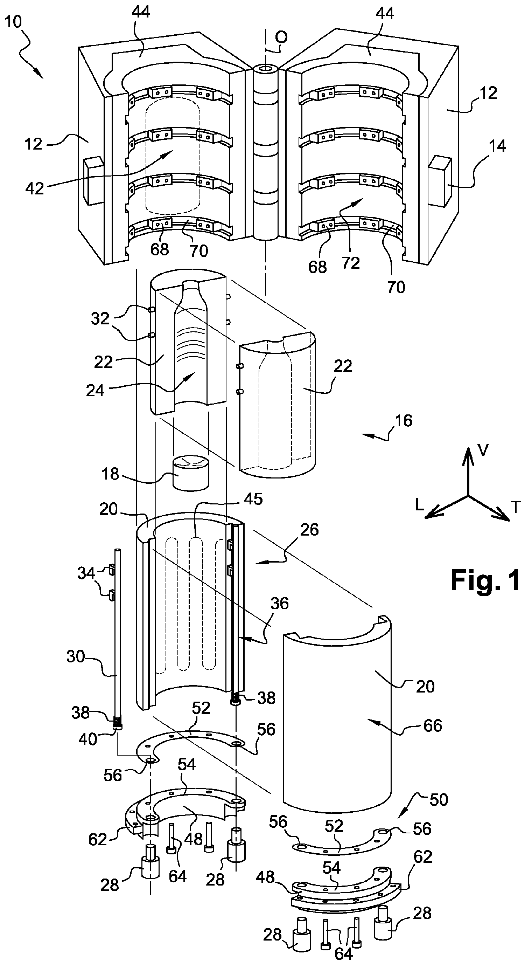

- la figure 1 est une vue en perspective qui représente un exemple de réalisation d'un dispositif de moulage en position ouverte et qui illustre au moyen d'un éclaté un moule de type HR dont chacun des demi-moules est réalisé en deux parties comportant un porte-coquille et une coquille aptes à être fixés ensemble par des moyens de fixation qui sont commandés par des moyens d'actionnement embarqués et qui sont protégés par des moyens de protection thermique selon l'invention;

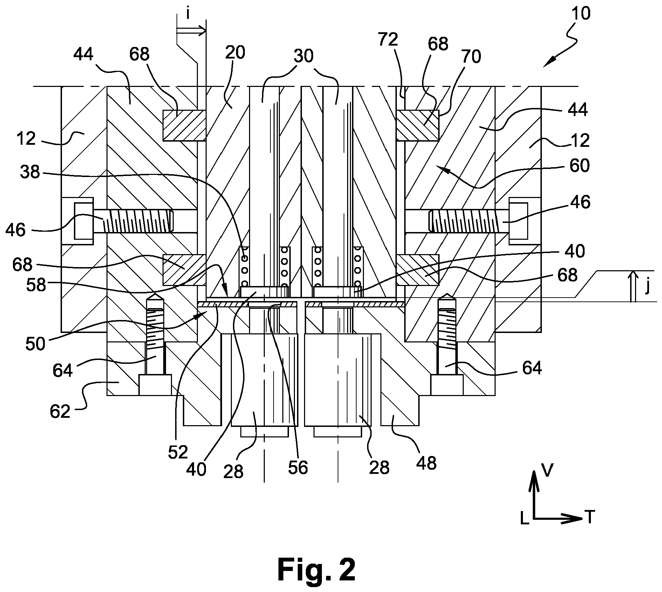

- la figure 2 est une vue en coupe qui représente une partie d'un dispositif de moulage selon la figure 1 en position fermée et qui illustre en détail des moyens de protection thermique desdits moyens d'actionnement embarqués comportant au moins une plaque de protection thermique surmontée d'une lame d'air ainsi que l'isolation thermique de chaque pièce intermédiaire sur laquelle est fixée une console supportant lesdits moyens d'actionnement des moyens de fixation.

Dans la suite de la description, on adoptera à titre non limitatif les orientations longitudinale, verticale et transversale en référence au trièdre (L, V, T) représenté sur les figures.

Dans la suite de la description, les directions longitudinale et transversale sont déterminées de manière fixe par rapport aux porte-moules de sorte que la position ouverte ou fermée occupée est sans incidence sur lesdites orientations.

Par convention, on utilisera à titre non limitatif les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale qui est plus particulièrement orientée depuis l'extérieur du moule vers l'intérieur du moule.

On a représenté schématiquement à la figure 1, un dispositif 10 de moulage pour une machine (non représentée) de fabrication de récipients en matière thermoplastique à partir d'une préforme.

A titre d'exemple non limitatif, on pourra se reporter au document WO-99/03667 qui décrit une installation pour la fabrication de récipients stériles.

Les préformes sont généralement obtenues par moulage par injection de matière thermoplastique, notamment de PET (*Polyéthylène Téréphtalate*).

Un tel dispositif 10 de moulage est généralement porté par une structure (non représentée) pour former l'un des postes d'une machine de fabrication de récipients en matière thermoplastique, en particulier lorsque ladite machine de type « rotative » comporte une pluralité de postes, avantageusement répartis circonférentiellement de manière régulière sur un carrousel.

La fabrication de récipients, tels que des bouteilles, est obtenue par formage d'une préforme chaude, par exemple préalablement chauffée dans un four de conditionnement thermique, au moyen d'au moins un fluide sous pression.

Le formage est par exemple réalisé par des moyens de soufflage ou d'étirage-soufflage qui sont montés mobiles par rapport au dispositif 10 de moulage.

On se reportera par exemple au document FR-2.764.544 pour de plus amples détails sur un exemple de réalisation de tels moyens de soufflage (ou d'étirage-soufflage), encore appelés aussi parfois « tuyère de soufflage » suivant leur conception.

Le dispositif 10 de moulage comporte au moins deux porte-moules 12 qui sont montés mobiles l'un par rapport à l'autre autour d'un axe O de rotation, s'étendant ici verticalement selon le trièdre (L, V, T).

Les porte-moules 12 formant une structure porteuse sont respectivement montés mobiles entre au moins une position ouverte et une position fermée.

Chaque porte-moule 12 comporte, selon la direction longitudinale, une partie arrière qui est complémentaire de la partie arrière de l'autre porte-moule 12 et qui est conformée pour s'interpénétrer avec cette dernière afin de former une articulation, telle une charnière dont les deux ferrures seraient toutefois pivotantes autour de l'axe O de rotation.

En variante, l'un des porte-moules est monté mobile tandis que l'autre porte-moule est fixe, le porte-moule mobile étant commandé en déplacement entre lesdites positions ouverte et fermée.

Les porte-moules 12 sont susceptibles de s'écarter mutuellement l'un de l'autre en pivotant respectivement autour de l'axe O de rotation. En raison de la cinématique des porte-moules 12, un tel dispositif 10 de moulage est encore appelé moule "portefeuille" (ou *"book-like opening"* en anglais).

L'entraînement des porte-moules 12 entre les positions ouverte et fermée est par exemple obtenu par un système de bras de traction dont une extrémité est montée articulée sur les porte-moules 12 et dont l'autre extrémité est reliée à des moyens de commande associés, notamment du type à galet et à came.

Une articulation des porte-moules 12 de ce type et des moyens de commande en ouverture et en fermeture associés sont par exemple décrits dans le document WO-A1-2004/018181.

Le dispositif 10 de moulage comporte un verrou 14 qui, agencé longitudinalement en partie avant, soit à l'opposé de l'articulation pivotante autour de l'axe O de rotation, est destiné à assurer le verrouillage des deux porte-moules 12 en position fermée.

Un tel verrou 14 est également connu et ne sera donc pas décrit plus en détail, ledit verrou 14 ayant notamment pour fonction de prévenir toute ouverture inopinée lors des opérations de formage du récipient par ledit au moins un fluide sous pression, tel que de l'air, les pressions finales de soufflage pouvant en effet atteindre 40 bars selon les applications.

Pour de plus amples détails sur la structure et le fonctionnement d'un tel verrou 14, on pourra par exemple se reporter au document FR-2.646.802.

Bien entendu, il ne s'agit que d'un exemple car il existe de nombreux verrous différents susceptibles d'assurer la fonction de verrouillage du dispositif 10 de moulage.

Le dispositif 10 de moulage comporte un moule 16 comportant au moins deux demi-moules.

De préférence, le moule 16 comporte un fond 18 de moule qui, complémentaire des demi-moules, comporte une empreinte correspondant au fond du récipient.

Le fond 18 de moule est porté par des moyens de support (non représentés) par l'intermédiaire desquels ledit fond 18 est monté mobile selon la direction verticale, respectivement entre une position basse et une position haute.

La position haute correspond à une position dans laquelle, le dispositif 10 de moulage étant en position fermée, le fond 18 de moule coopère avec les demi-moules pour délimiter ensemble une cavité de moulage correspondant au corps du récipient à fabriquer.

La position basse du fond 18 de moule est occupée lorsque le dispositif 10 de moulage est en position ouverte, notamment pour permettre l'extraction du récipient fabriqué hors du moule.

Les demi-moules du moule 16 comportent chacun au moins deux parties respectivement un porte-coquille 20 monté dans l'un des porte-moules 12 et une coquille 22 comportant une empreinte 24 pour le moulage du récipient.

Une telle conception du moule 16 présente de nombreux avantages notamment décrits dans le document EP-B1-0.821.641 précité.

Le dispositif 10 de moulage comporte des moyens 26 de fixation pour fixer de manière démontable chaque coquille 22 au porte-coquille 20 associé.

Les moyens 26 de fixation sont montés mobiles entre au moins une position de fixation et une position de libération.

Dans l'exemple de réalisation illustré par la figure 1, les moyens 26 de fixation des coquilles 22 sont de préférence analogues à ceux décrits dans le document WO-2011/026980 et plus particulièrement ceux représentés aux figures 1 à 6.

Bien entendu, des tels moyens 26 de fixation rapide ne constituent qu'un exemple de réalisation préféré. En variante, les moyens 26 de fixation sont également susceptibles d'être réalisés selon la figure 16 du document WO-2011/026980.

Suivant les enseignements de ce document, les moyens 26 de fixation sont susceptibles d'être commandés sélectivement par l'intermédiaire de moyens 28 d'actionnement embarqués.

Avantageusement, les moyens 28 d'actionnement sont constitués par des actionneurs, tels que des vérins pneumatiques.

Les moyens 26 de fixation sont de type mécanique et résultent de la coopération de formes entre deux éléments liés respectivement à chacune des pièces.

Les moyens 26 de fixation pour fixer chaque coquille 22 au porte-coquille 20 associé comportent au moins un organe 30 d'actionnement.

De préférence, les moyens 26 de fixation comportent des éléments mâles, tels que des pions, et des éléments femelles complémentaires, tels que des crochets.

Avantageusement, deux organes 30 d'actionnement sont prévus pour assurer une fixation rapide entre chaque bords verticaux, du côté arrière et avant, respectivement entre la coquille 22 et le porte-coquille 20 associé.

Tel qu'illustré par la figure 1, les moyens 26 de fixation comportent des pions 32 liés à la coquille 22, ici une paire de pions qui sont solidaires de chacun des bords verticaux de la coquille 22.

Les moyens 26 de fixation comportent des crochets 34 qui, ici au nombre de deux et destinés à coopérer avec lesdits pions 32, sont portés par chaque organe 30 d'actionnement.

De préférence, chaque organe 30 d'actionnement est monté coulissant selon la direction verticale dans un bord 36 du porte-coquille 20 pour engager ou désengager lesdits crochets 34 autour des pions 32 qui, respectivement, forment les moyens 26 de fixation.

Chaque organe 30 d'actionnement est monté mobile pour déplacer les moyens 26 de fixation entre une position de fixation et une position de libération.

Avantageusement, l'organe 30 d'actionnement est monté mobile à l'encontre de moyens 38 de rappel, tels que des ressorts, aptes à rappeler automatiquement les moyens 26 de fixation vers la position de fixation.

L'organe 30 d'actionnement comporte une partie 40 de commande agencée ici à son extrémité inférieure et sur laquelle agissent lesdits moyens 28 d'actionnement pour provoquer un changement de position desdits moyens 26 de fixation, de la position de fixation vers la position de libération.

Avantageusement, les moyens 26 de fixation intervenant entre chaque coquille 22 et son porte-coquille 20 sont aptes à être commandés par les moyens 28 d'actionnement lorsque les porte-moules 12 sont en position fermée.

De préférence, le dispositif 10 de moulage comporte des moyens 42 de compensation de pression pour maintenir la fermeture étanche du moule lors de la fabrication de récipients.

Avantageusement, le dispositif 10 de moulage comporte une pièce 44 intermédiaire qui est montée dans chaque porte-moule 12 et maintenue en position par des moyens 46 de liaison.

Les moyens de 46 de liaison sont par exemple constitués par des vis, lesdites vis 46 étant visibles sur la figure 2.

De préférence, les moyens 42 de compensation sont formés par une chambre de compensation qui est par exemple associée à l'une desdites pièces 44 intermédiaires.

En variante, les moyens 42 de compensation sont agencés entre l'un des porte-moules 12 et le porte-coquille 20 associé.

Pour de plus amples détails sur le fonctionnement d'une chambre de compensation et sa réalisation, on se reportera aux documents FR-2.659.265 ou EP-1.880.826 donnés toutefois à titre d'exemples non limitatifs.

Les moyens 28 d'actionnement embarqués sont de préférence montés sur une console 48, laquelle console 48 est liée en déplacement au dispositif 10 de moulage.

La console 48 est ici réalisée en deux parties, chacune des parties de la console 48 étant associée à l'un des porte-moules 12. Les deux parties de la console 48 délimitent centralement une ouverture permettant le passage vertical du fond 18 de moule.

Selon une caractéristique importante et tel qu'expliqué en préambule, le dispositif 10 de moulage selon l'invention est de type HR, le moule 16 étant chauffé pour fabriquer des récipients aptes notamment à pouvoir être ultérieurement remplis à chaud.

Le dispositif 10 de moulage de type HR comporte des moyens 45 de chauffage qui sont associés au moule 16 pour chauffer au moins les coquilles 22 dans l'exemple de réalisation illustré à la figure 1.

De préférence, les moyens 45 de chauffage sont formés par des résistances électriques qui sont portées par chaque porte-coquille 20 pour chauffer la coquille 22 associée.

Les moyens 45 de chauffage sont par exemple portés par la face interne de chaque porte-coquille 20 et agencés de manière à chauffer chaque coquille 22 par sa face externe.

Tel que rappelé en préambule, un moule 16 chauffé par des moyens 45 de chauffage peut atteindre une température comprise entre 130 à 160 °C.

Avantageusement, le dispositif 10 de moulage comporte des moyens de protection thermique pour protéger thermiquement au moins lesdits moyens 28 d'actionnement embarqués destinés à commander les moyens 26 de fixation intervenant entre chaque porte-coquille 20 et la coquille 22 associée.

Grâce aux moyens 50 de protection thermique selon l'invention, les moyens 28 d'actionnement embarqués sont notamment protégés des dommages que sont susceptibles de provoquer l'exposition à de telles températures élevées propres au dispositif 10 de moulage de type HR.

Avantageusement, les moyens 50 de protection thermique des moyens 28 d'actionnement comportent au moins une plaque 52 de protection thermique.

De préférence, ladite plaque 52 de protection thermique est réalisée dans un matériau isolant thermiquement.

La plaque 52 de protection thermique est réalisée dans un matériau polymère, par exemple du polytétrafluoéthylène (PTFE).

La plaque 52 de protection thermique présente par exemple une épaisseur comprise entre 1 mm et 4 mm, de préférence de l'ordre de 2 mm.

Tel qu'illustré par les figures 1 et 2, la plaque 52 de protection thermique présente globalement une forme en « U » similaire à celle de chaque partie de la console 48.

Une plaque 52 de protection thermique est fixée sur une face 54 supérieure de chaque partie de la console 48 supportant des moyens 28 d'actionnement des moyens 26 de fixation d'une coquille 22 au porte-coquille 20.

De préférence, la plaque 52 de protection thermique est fixée à la console 48 par vissage, en variante par collage ou tout autre moyen de fixation équivalent.

Chaque plaque 52 de protection thermique comporte deux ouvertures 56 pour permettre le passage, verticalement à travers ladite plaque, d'une partie des moyens 28 d'actionnement destinée à agir sur les moyens 26 de fixation.

Lorsque les moyens 28 d'actionnement sont constitués par des vérins pneumatiques, l'extrémité libre d'une tige de chaque vérin 28 est ainsi susceptible de traverser verticalement la plaque 52 pour venir agir sur les moyens 26 de fixation, soit dans l'exemple pour venir agir sur la partie 40 de commande de l'organe 30 d'actionnement des moyens 26 de fixation.

Dans l'exemple de réalisation, les moyens 28 d'actionnement ne sont pas en permanence en contact avec la partie 40 de commande de l'organe 30 d'actionnement des moyens 26 de fixation.

En effet, les moyens 38 de rappel sollicitent automatiquement vers la position de fixation l'organe 30 d'actionnement (portant ici les crochets 34 des moyens 26 de fixation).

Les moyens 28 d'actionnement n'agissent donc sur les moyens 26 de fixation, et plus précisément dans l'exemple sur la partie 40 de commande de l'organe 30 d'actionnement, que lorsque l'on souhaite procéder à la libération de la coquille 22, c'est à dire effectuer notamment un changement de moule.

Avantageusement, les moyens 50 de protection thermique des moyens 28 d'actionnement comportent au moins une lame 58 d'air formée par un jeu « j » présent verticalement entre les moyens 26 de fixation et les moyens 28 d'actionnement lorsque lesdits moyens 26 de fixation occupent la position de fixation.

De préférence, le jeu « j » formant ladite lame d'air est comprise entre 1 mm et 3 mm, par exemple de l'ordre de 2 mm.

Les moyens 50 de protection thermique comportent au moins une plaque 52 de protection thermique et/ou une lame 58 d'air.

De préférence, les moyens 50 de protection thermique des moyens 28 d'actionnement d'un organe 30 d'actionnement sont formés par une plaque 52 de protection thermique et une lame 58 d'air qui sont respectivement interposés verticalement pour former un écran entre lesdits moyens 28 d'actionnement et la source de chaleur que constituent le porte-coquille 20 et la coquille 22 chauffée par les moyens 45 de chauffage.

Avantageusement, la console 48 portant les moyens 28 d'actionnement n'est pas fixée au porte-coquille 20 afin de ne pas créer de pont thermique entre ces pièces.

De préférence, chaque partie de la console 48 est fixée au porte-moule 12 et liée en déplacement à celui-ci entre les positions ouverte et fermée.

Lesdits moyens 28 d'actionnement embarqués sont liés en déplacement aux porte-moules 12. Dans l'exemple de réalisation, lesdits moyens 28 d'actionnement embarqués sont liés en déplacement à chaque pièce 44 intermédiaire qui, montée entre le porte-coquille 20 et le porte-moule 12, est solidaire dudit porte-moule 12.

Avantageusement, le dispositif 10 de moulage comporte des moyens 60 d'isolation thermique pour limiter la propagation de la chaleur produite par les moyens 45 de chauffage en direction des porte-moules 12.

Les moyens 60 d'isolation thermique que comporte le dispositif 10 de moulage sont avantageusement agencés entre le porte-coquille 20 et le porte-moule 12.

De préférence, lorsque le dispositif 10 de moulage comporte une pièce 44 intermédiaire, le dispositif 10 de moulage comporte des moyens 60 d'isolation thermique agencés entre le porte-coquille 20 et ladite pièce intermédiaire 44 solidaire du porte-moule 12.

Lorsque le dispositif 10 de moulage comporte une pièce 44 intermédiaire, la console 48 supportant les moyens 28 d'actionnement est avantageusement fixée à ladite pièce 44 intermédiaire.

Tel qu'illustré sur les figures 1 et 2, chaque partie de la console 48 comporte un rebord 62 qui s'étend radialement vers l'extérieur afin de venir à l'aplomb de ladite pièce 44 intermédiaire.

Le rebord 62 de la console 48 est par exemple traversé verticalement par des vis 64 pour assurer la fixation de la console 48 à la pièce 44 intermédiaire.

Les moyens 28 d'actionnement des moyens 26 de fixation d'une coquille 22 à un porte-coquille 20 associé sont solidaires en déplacement de la pièce 44 intermédiaire qui est montée transversalement entre le porte-coquille 20 et le porte-moule 12.

Les moyens 60 d'isolation thermique sont alors agencés transversalement entre chacune desdites pièces 44 intermédiaires et le porte-coquille 20 adjacent.

Avantageusement, lesdits moyens 60 d'isolation thermique comportent au moins un espace rempli d'air qui est formé par un interstice « i » s'étendant transversalement entre chaque pièce 44 intermédiaire et une face 66 arrière du porte-coquille 20.

De préférence, lesdits moyens 60 d'isolation thermique comportent au moins des plaquettes 68 d'isolation thermique interposée entre le porte-moule 12 et le porte-coquille 20.

Les plaquettes 68 sont interposées transversalement entre chaque pièce 44 intermédiaire et la face arrière 66 de chaque porte-coquille 20.

De préférence, les plaquettes 68 sont portées par la pièce 44 intermédiaire, par exemple fixées à celle-ci par vissage.

Dans l'exemple de réalisation, la pièce 44 intermédiaire comporte des rainures 70 circulaires qui, ménagées dans une face 72 interne de ladite pièce 44, reçoivent lesdites plaquettes 68 d'isolation thermique.

Grâce aux moyens 60 d'isolation thermique, on limite la montée en température de chaque pièce 44 intermédiaire et ce faisant celui de la console 48 qui lui est rattachée et par extension on protège thermiquement les moyens 28 d'actionnement supportés par la console 48.

Bien entendu, le dispositif 10 de moulage selon les figures 1 et 2 ne constitue qu'un exemple de réalisation donné à titre non limitatif pour illustrer la mise en oeuvre de l'invention.

En effet, la conception d'un tel dispositif 10 de moulage est susceptible de varier en fonction des applications, c'est-à-dire des récipients et de leur utilisation notamment.

En variante de l'exemple de réalisation, le dispositif 10 de moulage pourrait ainsi comporter moins ou plus que les quatre éléments que sont respectivement le porte-moule 12, l'élément 44 intermédiaire, le porte-coquille 20 et la coquille 22 associée.

Tel qu'expliqué précédemment, la pièce 44 intermédiaire associée à chaque porte-moule 12 pourrait par exemple être supprimée, notamment en l'absence de mise en oeuvre de moyens 42 de compensation sous la forme d'au moins une chambre.

En l'absence de pièce 44 intermédiaire, les moyens 28 d'actionnement embarqués sont par exemple solidaires du porte-moule 12. De préférence, les moyens 28 d'actionnement sont montés par l'intermédiaire d'une console 48.

En variante, le dispositif 10 de moulage comporte par exemple d'autres éléments tels que des moyens de calage et/ou des moyens d'instrumentation pour la mesure de paramètre(s) comme la température.

Certaines fonctions comme la fonction de compensation ou encore celle de chauffage sont susceptibles d'être réalisées avec différents moyens, lesquels ne sont donc pas associés de manière limitative à l'un particulier des éléments du dispositif 10 de moulage.

## Revendications

1. Dispositif (10) de moulage pour une machine de fabrication de récipients en matière thermoplastique à partir d'une préforme, ledit dispositif (10) de moulage comportant au moins :
- deux porte-moules (12) montés mobiles l'un par rapport à l'autre autour d'un axe (O) de rotation entre une position ouverte et une position fermée,
- un moule (16) comportant au moins deux demi-moules qui comportent chacun au moins deux parties respectivement un porte-coquille (20) monté dans l'un des porte-moules (12) et une coquille (22) comportant une empreinte (24) pour le moulage du récipient, et
- des moyens (26) de fixation pour fixer de manière démontable chaque coquille (22) au porte-coquille (20) associé, lesdits moyens (26) de fixation étant montés mobiles entre au moins une position de fixation et une position de libération et commandés sélectivement par l'intermédiaire de moyens (28) d'actionnement embarqués,
**caractérisé en ce que** le dispositif (10) de moulage de type « HR » comporte des moyens (45) de chauffage associés au moule (16) pour chauffer au moins lesdites coquilles (22) **et en ce que** ledit dispositif (10) comporte des moyens (50) de protection thermique pour protéger thermiquement au moins lesdits moyens (28) d'actionnement embarqués.

2. Dispositif selon la revendication 1, **caractérisé en ce que** lesdits moyens (50) de protection thermique des moyens (28) d'actionnement comportent au moins une plaque (52) de protection thermique.

3. Dispositif selon la revendication 1 ou 2, **caractérisé en ce que** lesdits moyens (50) de protection thermique des moyens (28) d'actionnement comportent au moins une lame (58) d'air formée par un jeu (j) présent entre les moyens (26) de fixation et les moyens (28) d'actionnement lorsque lesdits moyens (26) de fixation occupent la position de fixation.

4. Dispositif selon l'une des revendications 1 à 3, **caractérisé en ce que** les moyens (26) de fixation de chaque coquille (22) au porte-coquille (20) associé comportent au moins un organe (30) d'actionnement qui est monté mobile, lesdits moyens (28) d'actionnement agissant sélectivement sur ledit au moins un organe (30) d'actionnement pour provoquer à l'encontre de moyens (38) de rappel un changement de position desdits moyens (26) de fixation, de la position de fixation vers la position de libération.

5. Dispositif selon la revendication 4, **caractérisé en ce que** les moyens (26) de fixation intervenant entre chaque coquille (22) et son porte-coquille (20) associé sont aptes à être commandés par les moyens (28) d'actionnement lorsque les porte-moules (12) sont en position fermée.

6. Dispositif selon l'une quelconque des revendications précédentes, **caractérisé en ce que** le dispositif (10) de moulage comporte des moyens (42) de compensation de pression pour maintenir la fermeture étanche du moule (16) lors de la fabrication de récipients.

7. Dispositif selon l'une quelconque des revendications précédentes, **caractérisé en ce que** lesdits moyens (28) d'actionnement embarqués sont liés en déplacement au porte-moule (12).

8. Dispositif selon la revendication 7, **caractérisé en ce que** le dispositif (10) de moulage comporte des moyens (60) d'isolation thermique agencés entre le porte-coquille (20) et le porte-moule (12).

9. Dispositif selon la revendication 8, **caractérisé en ce que** lesdits moyens (60) d'isolation thermique comportent au moins un espace rempli d'air qui est formé par un interstice s'étendant entre le porte-moule (12) et le porte-coquille (20).

10. Dispositif selon la revendication 9, **caractérisé en ce que** lesdits moyens (60) d'isolation thermique comportent au moins une plaquette (68) d'isolation thermique interposée entre le porte-moule (12) et le porte-coquille (20).

## Patentansprüche

1. Formgebungsvorrichtung (10) für eine Maschine zur Herstellung von Behältern aus Thermoplast ausgehend von einem Vorformling, wobei die Formgebungsvorrichtung (10) mindestens aufweist:
- zwei Formhalter (12), die zwischen einer offenen Stellung und einer geschlossenen Stellung um eine Drehachse (0) zueinander beweglich montiert sind,
- eine Form (16), die mindestens zwei Halbformen aufweist, die je mindestens zwei Teile aufweisen, einen in einen der Formhalter (12) montierten Schalenträger (20) bzw. eine Schale (22), die einen Formhohlraum (24) zum Formen des Behälters aufweist, und
- Befestigungseinrichtungen (26), um jede Schale (22) ausbaubar am zugeordneten Schalenträger (20) zu befestigen, wobei die Befestigungseinrichtungen (26) zwischen mindestens einer Befestigungsstellung und einer Freigabestellung beweglich montiert sind und selektiv mittels eingebauter Betätigungseinrichtungen (28) gesteuert werden,
**dadurch gekennzeichnet, dass** die Formgebungsvorrichtung (10) vom Typ "HR" der Form (16) zugeordnete Heizeinrichtungen (45) aufweist, um mindestens die Schalen (22) zu erwärmen, und dass die Vorrichtung (10) Wärmeschutzeinrichtungen (50) aufweist, um mindestens die eingebauten Betätigungseinrichtungen (28) vor Wärme zu schützen.

2. Vorrichtung nach Anspruch 1, **dadurch gekennzeichnet, dass** die Wärmeschutzeinrichtungen (50) der Betätigungseinrichtungen (28) mindestens eine Wärmeschutzplatte (52) aufweisen.

3. Vorrichtung nach Anspruch 1 oder 2, **dadurch gekennzeichnet, dass** die Wärmeschutzeinrichtungen (50) der Betätigungseinrichtungen (28) mindestens einen Luftzwischenraum (58) aufweisen, der von einem Spiel (j) gebildet wird, das zwischen den Befestigungseinrichtungen (26) und den Betätigungseinrichtungen (28) vorhanden ist, wenn die Befestigungseinrichtungen (26) die Befestigungsstellung einnehmen.

4. Vorrichtung nach einem der Ansprüche 1 bis 3, **dadurch gekennzeichnet, dass** die Befestigungseinrichtungen (26) jeder Schale (22) am zugeordneten Schalenträger (20) mindestens ein Betätigungsorgan (30) aufweisen, das beweglich montiert ist, wobei die Betätigungseinrichtungen (28) selektiv auf das mindestens eine Betätigungsorgan (30) einwirken, um gegen die Wirkung von Rückstelleinrichtungen (38) eine Stellungsänderung der Befestigungseinrichtungen (26) von der Befestigungsstellung zur Freigabestellung hervorzurufen.

5. Vorrichtung nach Anspruch 4, **dadurch gekennzeichnet, dass** die zwischen jeder Schale (22) und ihrem zugeordneten Schalenträger (20) intervenierenden Befestigungseinrichtungen (26) von den Betätigungseinrichtungen (28) gesteuert werden können, wenn die Formhalter (12) in der geschlossenen Stellung sind.

6. Vorrichtung nach einem der vorhergehenden Ansprüche, **dadurch gekennzeichnet, dass** die Formgebungsvorrichtung (10) Druckausgleichseinrichtungen (42) aufweist, um den dichten Verschluss der Form (16) bei der Herstellung von Behältern aufrechtzuerhalten.

7. Vorrichtung nach einem der vorhergehenden Ansprüche, **dadurch gekennzeichnet, dass** die eingebauten Betätigungseinrichtungen (28) in Verschiebung mit dem Formträger (12) verbunden sind.

8. Vorrichtung nach Anspruch 7, **dadurch gekennzeichnet, dass** die Formgebungsvorrichtung (10) Wärmeisolierungseinrichtungen (60) aufweist, die zwischen dem Schalenträger (20) und dem Formträger (12) angeordnet sind.

9. Vorrichtung nach Anspruch 8, **dadurch gekennzeichnet, dass** die Wärmeisolierungseinrichtungen (60) mindestens einen luftgefüllten Raum aufweisen, der von einem Zwischenraum gebildet wird, der sich zwischen dem Formträger (12) und dem Schalenträger (20) erstreckt.

10. Vorrichtung nach Anspruch 9, **dadurch gekennzeichnet, dass** die Wärmeisolierungseinrichtungen (60) mindestens eine Wärmeisolierungsplatte (68) aufweisen, die zwischen den Formträger (12) und den Schalenträger (20) eingefügt ist.

## Claims

1. Moulding device (10) for a machine for manufacturing thermoplastic containers from a preform, the said moulding device (10) comprising at least:
- two mould carriers (12) mounted with the ability to move relative to one another about an axis (0) of rotation between an open position and a closed position,
- a mould (16) comprising at least two half-moulds each of which comprises at least two parts, these respectively being a shell carrier (20) mounted in one of the mould carriers (12) and a shell (22) comprising an impression (24) for moulding the container, and
- fixing means (26) for removably fixing each shell (22) to the associated shell carrier (20), the said fixing means (26) being mounted with the ability to move between at least one fixing position and one freeing position and controlled selectively via on-board actuating means (28),
**characterized in that** the moulding device (10) of the "HR" type comprises heating means (45) associated with the mould (16) for heating at least the said shells (22) and **in that** the said device (10) comprises heat-protection means (50) for protecting at least the said on-board actuating means (28) from heat.

2. Device according to Claim 1, **characterized in that** the said heat-protection means (50) that protect the actuating means (28) comprise at least one heat-protection plate (52).

3. Device according to Claim 1 or 2, **characterized in that** the said heat-protection means (50) that protect the actuating means (28) comprise at least one air layer (58) formed by a clearance (j) present between the fixing means (26) and the actuating means (28) when the said fixing means (26) are in the fixing position.

4. Device according to one of Claims 1 to 3, **characterized in that** the fixing means (26) for fixing each shell (22) to the associated shell carrier (20) comprise at least one actuating member (30) which is mounted with the ability to move, the said actuating means (28) acting selectively on the said at least one actuating member (30) in order, against the action of return means (38), to cause the said fixing means (26) to change position from the fixing position towards the freeing position.

5. Device according to Claim 4, **characterized in that** the fixing means (26) operating between each shell (22) and its associated shell carrier (20) are able to be operated by the actuating means (28) when the mould carriers (12) are in the closed position.

6. Device according to any one of the preceding claims, **characterized in that** the moulding device (10) comprises pressure compensation means (42) to keep the mould (16) sealed closed during the manufacture of containers.

7. Device according to anyone of the preceding claims, **characterized in that** the said on-board actuating means (28) are connected in terms of movement to the mould carrier (12).

8. Device according to Claim 7, **characterized in that** the moulding device (10) comprises thermal insulation means (60) arranged between the shell carrier (20) and the mould carrier (12).

9. Device according to Claim 8, **characterized in that** the said thermal insulation means (60) comprise at least one air-filled space which is formed by a gap extending between the mould carrier (12) and the shell carrier (20).

10. Device according to Claim 9, **characterized in that** the said thermal insulation means (60) comprise at least one thermal insulation plate (68) interposed between the mould carrier (12) and the shell carrier (20) .
